# EUROPÄISCHE PATENTSCHRIFT

(11) **EP 4 127 549 B1**
(45) Veröffentlichungstag und Bekanntmachung des Hinweises auf die Patenterteilung: **10.09.2025**
(21) Anmeldenummer: 21717788.0
(22) Anmeldetag: 01.04.2021
(51) Int. Cl.: F16L 55/165, F16L 55/18, B29C 63/34, B29C 63/36

(54) **VORRICHTUNG ZUM EINZIEHEN, UND INSBESONDERE AUSHÄRTEN, EINER ROHRLEITUNGSAUSKLEIDUNG**
DEVICE FOR PULLING IN, AND IN PARTICULAR CURING, A PIPELINE LINER
DISPOSITIF DE MISE EN PLACE ET, EN PARTICULIER, DE DURCISSEMENT D'UNE CHEMISE DE CANALISATION

(30) Priorität: 03.04.2020 DE 102020109411
(43) Veröffentlichungstag der Anmeldung: 08.02.2023
(73) Patentinhaber: BRAWO SYSTEMS GmbH, 67659 Kaiserslautern (DE)
(72) Erfinder: SCHMITT, Christopher, 67731 Otterbach (DE); FRITZ, Maximilian, 67752 Rutsweiler (DE)
(74) Vertreter: DREISS Patentanwälte PartG mbB
(86) Internationale Anmeldenummer: PCT/EP2021/058721
(87) Internationale Veröffentlichungsnummer: WO 2021/198472

(56) Entgegenhaltungen:
- EP-A1- 3 336 404
- JP-A- H06 246 831
- US-A1- 2006 151 913

## Beschreibung

Die Erfindung betrifft eine Vorrichtung zum Einziehen, und insbesondere Aushärten, einer Rohrleitungsauskleidung in eine Rohrleitung, umfassend ein Gehäuse mit einem ersten Endstück und einem zweiten gegenüberliegenden Endstück sowie einen sich zwischen den Endstücken erstreckenden Gehäusekörper sowie einer mit dem ersten Endstück verbundenen Stromzuleitung.

Bei der Sanierung von Rohren ist es ein bekanntes Verfahren, ein mit Harz getränktes Schlauchmaterial (sogenannte Liner) in das zu sanierende Rohr einzuführen und an die Innenwand zu pressen, bis das Harz ausgehärtet ist.

Geeignete Linermaterialien sind unter dem Namen Brawoliner der Karl-Otto Braun GmbH, Wolfstein, Deutschland bekannt und z.B. in der DE 10 2015 212 025 A1 oder der EP 0 875 713 A1 beschrieben. Diese Linermaterialien können bevorzugt in einem Inversionsvorgang in das zu sanierende Rohr eingeführt werden. Dabei wird ein zunächst auf links gestülpter, mit Harz getränkter Schlauch so in das zu sanierende Rohr eingeblasen, dass die zunächst innen liegende Schlauchseite im Rohr den Kontakt zwischen Schlauchmaterial und Rohrinnenwand vermittelt. Bei einem Inversionsverfahren, wie es im Stand der Technik bekannt ist, wird ein schlauchförmiges Auskleidungsmaterial auf der Innenseite mit einem aushärtbaren Harz beschichtet, indem das Harz in den Schlauch eingefüllt wird. Der Schlauch wird dann zur gleichmäßigen Verteilung des Harzes und insbesondere zur Bereitstellung einer gleichmäßigen Schichtdicke verpresst und beispielsweise in einer sogenannten Inversionstrommel aufgewickelt, wobei die Inversionstrommel mit einem sogenannten Inversionsbogen, der in das zu sanierende Rohr oder Kanal einbringbar ist, verbindbar ist. Das eine Ende des schlauchförmigen Auskleidungsmaterials wird dabei von innen nach außen um das Ende des rohrförmigen Inversionsbogens herumgelegt und dort festgelegt. Durch Einbringen eines Fluids wird dann das schlauchförmige Auskleidungsmaterial unter gleichzeitiger Invertierung in die Rohrleitung oder den Kanal eingebracht. Als Fluid können Flüssigkeiten oder Gase eingesetzt werden, vorzugsweise Wasser oder Luft. Dabei kann das zweite Ende des schlauchförmigen Auskleidungsmaterials geschlossen ausgebildet sein.

Sofern erforderlich kann vorgesehen sein, zusätzlich noch einen Stützschlauch als Teil des Auskleidungsmaterials zu verwenden. Der Stützschlauch wird so eingebracht, dass er in der Rohrleitung innerhalb des übrigen Auskleidungsmaterials, nämlich eines Schlauchliners, zum Liegen kommt.

Der Stützschlauch wird vorzugsweise dann eingesetzt, wenn das zweite Ende des Auskleidungsmaterials nicht verschlossen werden kann zum Einbringen, da es nach fertiger Sanierung nicht öffenbar ist, z. B. weil es unzugänglich ist.

Vor dem Einbringen wird üblicherweise darüber hinaus das zweite Ende, das im eingebrachten Zustand in der zu sanierenden Rohrleitung zum Liegen kommt, verschlossen, um so ein Einbringen von Fluiden und damit ein Anlegen des Aushärtungsmaterials an die zu sanierende Rohrleitung zu ermöglichen. Dieses Ende wird später entfernt, um die Rohrleitung durchgängig zu machen. Kann ein Verschließen dieses Endes aus Sanierungsgründen nicht vorgesehen werden, kann der vorstehend beschriebene zusätzliche Stützschlauch eingebracht werden, dessen korrespondierendes Ende dann verschlossen wird. Durch das Einbringen von Fluiden, entweder Flüssigkeiten oder Gasen in das Auskleidungsmaterial, wird das Auskleidungsmaterial gegen die Wandung der Rohrleitung angelegt und an dieser mittels des Harzes festgelegt und dort ausgehärtet, so dass dann ein vollständig neues Rohr im Rohr entsteht. Auf der Innenseite des eingebrachten Auskleidungsmaterials kann ferner eine Schicht vorgesehen sein, die gegen die später durchzuleitenden Stoffe beständig ist und insbesondere Ablagerungen verhindert.

Die ursprünglich außen liegende Seite bildet nach Beendigung des Inversionsvorgangs die Innenseite des ausgekleideten Rohrs.

Dabei kann vorgesehen sein, dass eine Vorrichtung mit eingezogen werden kann, wobei diese Vorrichtung vorzugsweise Mittel zum Aushärten des Harzes der Rohrleitungsauskleidung aufweisen kann, wie zum Beispiel eine Vorrichtung zum Aushärten mittels UV-Strahlung oder zum Einleiten von Dampf.

Die Begriffe Rohr, Rohrleitung, Kanal oder Kanalleitung werden im Folgenden analog verwendet.

Ebenfalls analog werden die Begriffe Rohrauskleidung, Rohrleitungsauskleidung und Liner verwendet.

Zur Aushärtung des Harzes ist es bekannt, zusätzlich zum Erwärmen des Auskleidungsmaterials um den Aushärteprozess zu beschleunigen oder in Gang zu setzen, Dampf durch das Auskleidungsmaterial hindurch zu leiten, ohne den vorher darin herrschenden Innendruck ablassen zu müssen bzw. wesentlich zu beeinflussen, da dies zu einem Zusammenfallen des Auskleidungsmaterials führen könnte.

Aus der WO 2007/044052 A2 ist ein entsprechender Zugang bekannt, wobei dieser jedoch vorzugsweise erst nach dem Einbringen des Auskleidungsmaterials vorgesehen wird und insbesondere hierzu eine Öffnung in das Auskleidungsmaterial geschnitten werden muss. Da das Auskleidungsmaterial zu diesem Zeitpunkt noch nicht vollständig ausgehärtet ist, können sich zusätzliche Schwierigkeiten ergeben. Insbesondere kann der Prozess des Aushärtens mittels der notwendigen Temperatur einen Zeitraum von mehreren Stunden in Anspruch nehmen, während dessen die Vorrichtung in Betrieb gehalten werden muss.

Ein Verfahren, in dem eine Aushärtevorrichtung zusammen mit einem Liner in ein zu sanierendes Rohr eingeführt wird, ist in WO 2019/036044 beschrieben.

Nachteilig ist hierbei, dass die Vorrichtung mit dem Liner zusammen eingezogen werden muss und nur durch das zweite Ende vom Liner getrennt werden kann. Solange das zweite Ende nicht geöffnet ist, kann die Vorrichtung nicht aus dem Liner entfernt werden, so dass ggf. lange gewartet werden 25 muss, bis der Liner ganz ausgehärtet ist.

Die US 2006/151913 A1 betrifft eine Vorrichtung und ein Verfahren zum Auskleiden von Kanälen und anderen Rohrleitungen.

Aufgabe der vorliegenden Erfindung ist es nun, eine Vorrichtung zum Einziehen von Linermaterialien in Rohrleitungen(Rohrkleidungsmaterialien) für die Innenrohrauskleidung bereitzustellen, die auf einfache Weise mit eingezogen und wieder vom Rohrauskleidungsmaterial getrennt und aus diesem herausgezogen werden kann.

Erfindungsgemäß wird eine Vorrichtung nach Anspruch 1 bereitgestellt.

Am zweiten Endstück, insbesondere an dessen freier Stirnfläche, ist ein Elektromagnet vorgesehen, der mit der Stromzuleitung gekoppelt und über diese bestrombar ist. Hierüber kann dann ein metallisches Element, das an dem Liner festgelegt ist, lösbar an die Vorrichtung gekoppelt werden. Der Elektromagnet kann dann über die Stromzuleitung an und abgeschaltet werden, indem er bestromt oder nicht bestromt wird und kann dann magnetisch mit einem metallischen Element ge- oder entkoppelt werden.

Dabei kann eine Fernauslösung vorgesehen sein.

Durch erfindungsgemäße Vorsehung eines Elektromagneten, der mit einem metallischen Gegenstück zusammenwirkt, das mit dem Liner gekoppelt ist, kann die Trennung der Vorrichtung von der Rohrauskleidung über die Ferne erfolgen, indem der Elektromagnet während des Einziehens bestromt wird und danach abgeschaltet wird, so dass eine Trennung von dem metallischen Gegenstück erfolgt.

Nach einer Gestaltung wird hierfür vor dem Einziehen ein Stahlelement als Gegenstück mit einem Zugseil verbunden und an dem Linerende angebracht. Die Vorrichtung, insbesondere mit ihrem zweiten Endstück wird an dieses Gegenstück geführt und der Elektromagnet bestromt. Dies bewirkt den Aufbau des Magnetfeldes und hält die Vorrichtung am Seil.

Anschließend wird die Vorrichtung mit dem Liner in das zu sanierende Rohr eingezogen, insbesondere eingeblasen (inversiert). Ist das Rohrauskleidungsmaterial in das zu sanierende Rohr eingebracht, wird die Vorrichtung, durch Abschalten des Magneten, vom Zugseil getrennt und kann zu einem gewünschten Zeitpunkt aus dem sanierten Rohr entfernt werden, in dem sie rückwärts, also in Richtung der Einbringstelle wieder herausgezogen wird.

Dabei kann, sofern es sich um eine Vorrichtung zum Aushärten des Rohrauskleidungsmaterials handelt, z.B. über UV-Strahlung, die Vorrichtung während des Herausziehens betätigt.

Nach einer bevorzugten Ausführungsform werden im Fall einer UV-Aushärtung des Harzes mittels LED, die LED angeschaltet und die Vorrichtung wird im Rohr zurückgezogen.

Die Rückzugsgeschwindigkeit ist dabei so angepasst, dass eine ausreichende Bestrahlung der neu entstandenen und durch den Liner gebildeten Rohrinnenwand erfolgt kann, so dass das Harz vollständig aushärten kann.

Vorzugsweise kann die Rückzugsgeschwindigkeit konstant über die gesamte Strecke sein.

Der Elektromagnet kann Teil des zweiten Endstücks sein oder mit diesem insbesondere lösbar verbunden sein.

Der Elektromagnet wird insbesondere über eine Schraubverbindung an dem zweiten Endstück und insbesondere an dessen freier Stirnseite festgelegt.

Der Elektromagnet kann dabei scheiben- oder ringförmig sein und insbesondere einen Außendurchmesser bzw. äußere Abmessungen aufweisen, die kleiner, insbesondere geringfügig kleiner und insbesondere allseitig kleiner als die äußeren Abmessungen des zweiten Endstücks sind. Insbesondere ist der Elektromagnet höchstens 40%, insbesondere höchstens 30%, insbesondere höchstens 20% und insbesondere höchstens 10% kleiner als das zweite Endstück.

Besonders bevorzugt ist der Elektromagnet mit einem Gegenstück koppelbar, das eine Einrichtung, insbesondere eine Durchgangsöffnung zum Verbinden bzw. Befestigen mit einer Einzugsvorrichtung für die Vorrichtung in die Rohrleitung aufweist. Auf diese Weise kann die Anbindung an das Rohrauskleidungsmaterial besonders einfach realisiert werden.

Nach einer besonders bevorzugten Gestaltung kann das Gegenstück als Abdeckkappe für den Elektromagneten ausgebildet sein und diesen insbesondere hutförmig abdeckt. Dabei kann die Einrichtung, insbesondere die Durchgangsöffnung in die Abdeckkappe und insbesondere in die Form integriert sein. Hierdurch wird ein Schutz des Elektromagneten und insbesondere eine sichere Verbindung gewährleistet.

Weiterhin bevorzugt entspricht die äußere Umfangskontur des Gegenstücks der äußeren Umformungskontur des zweiten Endstücks. Durch das Vermeiden von vorstehenden Kanten oder Teilen wird eine besonderes gute Verbindung und Einziehbarkeit erreicht.

Ab einer bestimmten Leitungslänge kann eine Vorrichtung zum Aushärten eines Rohrauskleidungsmaterials, wenn sie nicht direkt am Kopf, also an der Vorrichtung selber, angetrieben wird, ausschließlich eingezogen werden. Hierfür wird ein Zugseil an der Vorrichtung befestigt. Über dieses Seil wird die Vorrichtung in die Leitung gezogen. Das Einziehen ist nur möglich, wenn am Bestimmungsort ein Zugang vorhanden ist, um das Seil händisch von der Vorrichtung zu trennen. Dies bewirkt, dass ein Einbau eines Liners nicht mit geschlossenem Ende möglich ist. Zusätzlich muss der Liner während der Trennung drucklos sein. Durch das Ablassen des Drucks und den erneuten Druckaufbau wird Luft zwischen der zu sanierenden Rohrleitung und dem eingebrachten Liner eingeschlossen. Diese Luft verschlechtert jedoch die Qualität der Sanierung. Dieses Problem kann erfindungsgemäß vermieden werden.

Die Rohrleitungsauskleidung ist schlauchförmig und umfasst ein Textilmaterial, das mit einem Harz beschichtet oder imprägniert ist, wobei das Harz aushärtbar ist und die Aushärtung durch elektromagnetische Strahlung einer vorgegebenen Wellenlänge oder eines vorgegebenen Wellenlängenbereichs erfolgt. Seit einiger Zeit gibt es Harzmaterialien, die ein Photoinitiationssystem enthalten, womit durch Einwirkung elektromagnetischer Strahlung anstelle des thermischen Systems der Aushärtevorgang initiiert und beschleunigt werden kann. Der Aushärtevorgang erfolgt nach Bestrahlung innerhalb weniger Minuten. Zur Initiation des Aushärtevorgangs wird eine Strahlungsquelle entlang des mit einem Liner ausgestatteten Rohrs entlanggeführt. Die Führungsgeschwindigkeit wird dabei so gewählt, dass die Strahlungsmenge ausreichend groß ist, um den Aushärtevorgang zu initiieren. Dieser Prozess ist um ein Vielfaches weniger zeitaufwändig als das oben beschriebene Verfahren der Aushärtung mittels Dampf oder anderen Fluiden.

Mit der Entwicklung der LED-Technologie ist es möglich geworden, energiesparende Lichtquellen mit geringem Platzbedarf zu konstruieren. Spezielle Probleme ergeben sich dadurch, dass die LED-Lampen trotz ihrer vergleichsweise hohen Energieeffizienz immer noch beträchtliche Wärmemengen abgeben, die im zu sanierenden Rohr die Temperatur weit ansteigen lassen können, wodurch eine Überhitzung der LEDs bis hin zum Ausfall der LEDs erfolgen kann, so dass die Sanierung abgebrochen werden muss.

Eingesetzte Vorrichtungen benötigen daher effiziente Kühlsysteme der LED-Lampen. Solche Vorrichtungen für die Innenrohrsanierung mittels Lichtaushärtung sind beispielsweise in EP 2 129 956 A1 beschrieben, die eine Vorrichtung und ein Verfahren zum Aushärten einer Auskleidung einer Rohrleitung offenbart. Die Vorrichtung umfasst ein zylindrisches Gehäuse, auf dessen Außenwand gleichmäßig LEDs angeordnet sind. Das Gehäuse weist einen inneren Durchgang auf, in dem wärmeableitende Elemente angeordnet sind. Die wärmeableitenden Elemente stehen in Verbindung mit den außen angebrachten LEDs und transportieren deren Wärme ins Innere der Vorrichtung. Dort durchströmt ein Kühlfluid die Vorrichtung und passiert dabei die wärmeableitenden Elemente.

Ferner beschreibt die EP 3 321 554 A1 eine Vorrichtung zur Lichtaushärtung eines Linermaterials. Die Vorrichtung weist LEDs auf, die an der Innenseite mit wärmeableitenden Elementen versehen sind. Kühlmittel durchströmt die wärmeableitenden Elemente und bewirkt so eine Kühlung der LEDs.

In der EP 3 236 129 A1 ist ein LED-Kopf zur Verwendung bei der Innenrohrsanierung beschrieben. Der LED-Kopf weist ein Gehäuse auf, auf dessen äußerer Oberfläche LED-Module angebracht sind. Das Gehäuse wird in einem zentralen Kanal von einem Kühlmittel durchströmt, welches durch radial angeordnete Kanäle nach außen geleitet wird.

Nachteilig bei diesen Systemen ist, dass die Kühlung des LED nur über Wärmeleitung über Bauteile an ein Kühlfluid erfolgt.

Die Vorrichtung weist radial verlaufende Ausleger im Gehäuse auf, auf deren äußeren Stirnflächen jeweils mindestens eine, insbesondere eine Mehrzahl von Strahlungsquellen, insbesondere Leuchtdioden (LED) angeordnet sind, die Strahlung, insbesondere Licht der vorgegebenen Wellenlänge oder des vorgegebenen Wellenlängenbereichs aussenden bzw. ausstrahlen und die mit der Stromzuleitung verbunden sind, wobei das Gehäuse zwischen den Auslegern Kühlfluid-Durchgangsöffnungen aufweist, die mit einer Kühlfluidzuleitung gekoppelt sind, so dass im Betrieb Kühlfluid in diese eintreten kann, und wobei sich die Kühlfluid-Durchgangsöffnungen in Längsrichtung wenigstens abschnittsweise durch den Gehäusekörper erstrecken. Vorzugsweise erstrecken sich die Durchgangsöffnungen durch den ganzen Gehäusekörper, insbesondere in den Bereichen wo die LEDs angeordnet sind. Die Kühlfluiddurchgangsöffnungen sind im Bereich des Gehäusekörpers nach radial außen durch Längsstege begrenzt, wobei zwischen den Längsstegen und den Auslegern und/oder den Längsstegen und den auf den Auslegern angeordneten Leuchtdioden eine oder mehrere in Längsrichtung verlaufende spaltförmige Austrittsöffnungen für das Kühlfluid besteht. So kann die spaltförmige Durchgangsöffnung z.B. über die gesamte Länge des Gehäusekörpers zwischen den Endstücken, insbesondere im Bereich, in dem die LEDs angeordnet sind, erstrecken. Dabei kann die spaltförmige Durchgangsöffnung durchgehend oder auch unterbrochen ausgebildet sein. Durch eine unterbrochene Gestaltung kann das Kühlfluid noch besser zu den zu kühlenden LEDs gelenkt werden und kann noch effizienter genutzt werden. Hierzu können an den Längsstegen Trennelemente vorgesehen sein, die die spaltförmigen Durchgangsöffnungen unterbrechen. Die Trennelemente können sich nach radial innen erstreckende Bauteile sein, die in diesem Bereich die spaltförmigen Öffnungen verschließen.

Im Folgenden wird die Erfindung anhand von Leuchtdioden erläutert. Es ist dabei aber auch erfindungsgemäß andere Strahlungsquellen einzusetzen, die im Bereich des sichtbaren aber auch im Bereich des UV- oder IR-Spektrums liegen. Ebenfalls können andere Strahlungen, wie Mikrowellen eingesetzt werden zur Aushärtung des Rohrauskleidungsmaterials. Der Begriff LED soll im Rahmen der Erfindung solche Strahlungsquellen ebenfalls umfassen.

Der Vorteil besteht darin, dass anders als bei der bekannten Kühlung, bei der das Kühlfluid über ein oder mehrere Kühlelemente geführt wird, über die die Wärme der LED, die durch die Verlustwärme der LED entsteht, an das Kühlfluid erfindungsgemäß das Kühlfluid, insbesondere ein Gas, durch die Durchgangsöffnungen geleitet wird und die LEDs unmittelbar die LED kühlt. Die Wärmeübertragung erfolgt erfindungsgemäß über Wärmeströmung (Konvektion) und nicht Wärmeleitung. Durch die spaltförmigen Austrittsöffnungen tritt das Kühlfluid unmittelbar im Bereich der LED aus und überstreicht diese. Durch die spaltförmige Gestaltung wird das Kühlfluid vorzugsweise wie durch eine Düse beschleunigt, wodurch die Wärmeabfuhr noch verbessert wird. Hierdurch wird die Überströmung der LED verbessert und eine effektivere Kühlung erreicht.

Die Ausleger sind vorzugsweise sternförmig (radialsymmetrisch) angeordnet und erstrecken sich vom Zentrum des Gehäusekörpers zu seiner Außenseite, wobei vorzugsweise acht Ausleger und damit acht Kühlfluid-Durchgangsöffnungen vorgesehen sind, die den Gehäusekörper durchspannen. Die Durchgangsöffnungen erstrecken sich zwischen den Auslegern. Die Form der Durchgangsöffnungen und der Ausleger sind aneinander angepasst. So können die Durchgangsöffnungen im Wesentlichen kreisförmig im Querschnitt sein oder auch eine sich vom Zentrum aus nach radial außen erweiternde Form aufweisen, die eher einem Tortenstück gleicht Darüber hinaus sind auch Gestaltungen mit mehr oder weniger als acht Durchgangsöffnungen denkbar, wobei sowohl eine gerade als auch eine ungerade Anzahl vorgesehen sein kann. Auch wenn die Ausleger und die Durchgangsöffnungen vorzugsweise radialsymmetrisch sind, sind auch andere Gestaltungen denkbar, bei denen die Anordnung nicht gleichmäßig über den Umfang oder nicht äquidistant ist.

Die Längsstege können dabei verschiedene Querschnittsformen annehmen. Bevorzugt sind dreieckige Querschnitte, wobei zwei Spitzen zur Ausbildung der spaltförmigen Austrittsöffnungen dienen und somit in Richtung der LEDs bzw. der Ausleger weisen, die die LEDs tragen und eine Spitze nach radial außen gerichtet ist. Dadurch, dass eine Fläche der Längsstege dann die Durchgangsöffnungen begrenzt, wird das Kühlfluid besonders gut geleitet. Alternativ sind flache Gestaltungen denkbar, bei denen die nach außen gerichtete Spitze fehlt oder abgerundet ist.

Bevorzugt ist vorgesehen, dass auf jeder Stirnseite eines Auslegers mehrere, insbesondere drei oder mehr LEDs angeordnet sind. Alternativ kann jedoch je Ausleger auch nur eine LED vorgesehen sein. Wie dargelegt können anstelle der LED auch andere Strahlungsquellen vorgesehen sein, die ebenfalls im Rahmen dieser Anmeldung unter den Begriff LED subsumiert werden soll. Die LED können einzeln vorgesehen sein oder zu mehreren als LED-Module gruppiert sein und als Module verbaut werden. Die LEDs eines Moduls können dabei auf einer gemeinsamen Basisplatte angeordnet und über diese mit Strom versorgt und gemeinsam angesteuert werden.

Bevorzugt ist vorgesehen, dass sich die Ausleger und damit die Strahlungsquellen und/oder die Längsstege und/oder die Austrittöffnungen über die gesamte Länge des Gehäusekörpers erstrecken. Hierdurch wird eine besonders große Fläche bereitgestellt, die Strahlung zum Aushärten bereitstellen kann, bei gleichzeitig optimaler Kühlung.

Die Kühlfluidzuleitung ist bevorzugt mit dem ersten Endstück verbunden und tritt insbesondere im Bereich der freien Stirnfläche desselben, insbesondere mit der Stromleitung in dieses ein. Die Zuführung von Strom- und Kühlfluid kann dabei in einer gemeinsamen Zufuhreinrichtung erfolgen.

Weiterhin ist bevorzugt vorgesehen, dass das zweite Endstück geschlossen ausgebildet ist. Hierdurch wird sichergestellt, dass alles Kühlfluid an den LEDs vorbei geleitet wird und der Kühlung zur Verfügung steht. Sofern das zweite Endstück nicht geschlossen ausgebildet ist, muss auf andere Weise sichergestellt werden, dass das Kühlfluid nicht durch das Endstück austritt, sondern durch die spaltförmigen Austrittsöffnungen geleitet wird, um auf diese Weise eine konvektive Kühlung der LEDs sicherzustellen. Dies kann durch weitere Bauteile erfolgen, wie zum Beispiel weitere nachgeschaltete Vorrichtungen oder zusätzliche Verschlussmittel.

Die Austrittsöffnungen kann eine Breite von 0,1 bis 10 mm, insbesondere 0,5 bis 5 mm und insbesondere 0,7 bis 1,1 mm aufweisen. Unter Breite soll dabei der kürzeste Abstand zwischen der Kante des Längsstegs und dem Ausleger bzw. den LEDs oder deren Modulträgern verstanden werden. Die Breite aller Austrittsöffnungen ist vorzugsweise gleich und konstant über deren Länge. Alternativ kann die Breite jedoch auch über die Länge des Gehäusekörpers variieren. Das Verhältnis zwischen der Fläche der Austrittsöffnungen und der Querschnittsfläche der Durchgangsöffnungen beträgt vorzugsweise zwischen 1:2 und 1:6, insbesondere 1:2,5 und 1:4 und insbesondere 1:2,9 und 1:3,1. Hierdurch wird sichergestellt, dass das Kühlfluid beim Durchtritt durch die Austrittsöffnungen in der gewünschten Weise beschleunigt wird.

Zur Aushärtung des Auskleidungsmaterial ist es bevorzugt, dass die LED ein Emissionsmaximum bei einer Wellenlänge von 360 bis 450 nm, insbesondere von 365 bis 405 nm und insbesondere von 385 bis 405 nm und vorzugsweise von 395 nm aufweisen.

Die Vorrichtung ist vorzugsweise im Wesentlichen zylindrisch ausgebildet, wodurch das Einführen und Führen durch das zu reparierende oder auszukleidende Rohr erleichtert wird. Alternativ sind auch andere Formen denkbar, die im Wesentlichen rotationssymmetrisch sind aber zum Beispiel auch eine polyedrische Querschnittsform haben können.

Insbesondere ist vorgesehen, dass die Endstücke den gleichen Durchmesser aufweisen wie der Gehäusekörper. Dabei wird der Durchmesser des Gehäusekörpers insbesondere durch die Längsstege bestimmt. D.h., dass die Stirnflächen der Ausleger und auch die LED sind in diesem Fall gegenüber den Längsstegen zurückgesetzt. Hierdurch wird erreicht, dass die LEDs den erforderlichen Abstand zur Rohrwandung bzw. zum Auskleidungsmaterial einhalten, um zum einen, die LEDs nicht zu beschädigen sowie die Aushärtung sicher zu gewährleisten.

Nach einer Ausgestaltung kann das Gehäuse einen zentralen Kanal aufweisen, der von einer Gehäusefläche umschlossen ist von dem aus sich die Ausleger radial nach außen erstrecken. Dabei kann in dem Kanal die elektrische Versorgung vorgesehen sein sowie weitere Bauteile, wie zum Beispiel Stecker oder andere elektrische Anschlüsse.

Die Endstücke und die Längsstege können nach einer Ausführungsform einstückig miteinander ausgestaltet sein.

Ebenfalls kann erfindungsgemäß die Vorrichtung mehrteilig oder einteilig gestaltet sein. Bevorzugt kann das eine oder beide Endstücke mehrteilig gestaltet sein. Wenn das erste Endstück mehrteilig ist, kann vorgesehen sein, dass ein den Anschluss für die Kühlfluidzuleitung und die Stromzuleitung tragendes erstes Endstückelement vorgesehen ist Dieses kann in ein weiteres Endstückelement des Endstücks, das das erste Endstückelement zum Beispiel konzentrisch umschließen kann, eingeschoben und mit dem weiteren Endstückelement zur Bildung des Endstücks verbunden werden. Die beiden Endstückelemente könnten dabei z.B. über Schraubverbindungen verbunden werden. Andere Verbindungstechniken, wie Rastverbindungen etc., sind gleichfalls denkbar.

Als Kühlfluid wird insbesondere Luft eingesetzt. Es sind jedoch auch andere Gase oder Flüssigkeiten denkbar. Weitere Vorteile und Merkmale ergeben sich aus den übrigen Unterlagen der Beschreibung und den Ansprüchen.

Eine bevorzugte Ausgestaltung ist in der nachfolgenden Zeichnung beschrieben. Dabei zeigen:
- Figur 1: eine perspektivische Darstellung der erfindungsgemäßen Vorrichtung;
- Figur 2: eine Vorrichtung gemäß der Erfindung in verschiedenen Ansichten gemäß Figur 1;
- 2a und 2b, c, d, e, f: verschiedene Ansichten der Vorrichtung;
- Figur 3: eine Vorrichtung gemäß Figur 1 im teilgeöffneten Zustand in einer ersten Ansicht;
- Figur 4: eine weitere Ansicht gemäß Figur 3; und
- Figur 5a, 5b): die Vorrichtung gemäß Figur 1 während und nach dem Inversionsvorgang

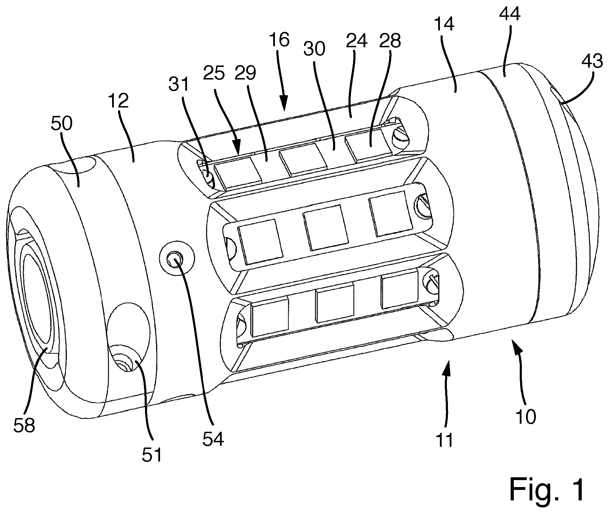

Figur 1 zeigt in perspektivischer Darstellung eine Vorrichtung, die in ihrer Gesamtheit mit dem Bezugszeichen 10 versehen ist. Die Vorrichtung weist ein Gehäuse 11 auf, mit zwei Endstücken, nämlich ein erstes Endstück 12 und ein zweites Endstück 14 sowie einen dazwischen angeordneten Gehäusekörper 16. Der Gehäusekörper 16 und die Endstücke 12, 14 sind im Wesentlichen zylindrisch ausgebildet.

Die Endstücke 12 und 14 sind einstückig mit Längsstegen 24 des Gehäusekörpers 16 ausgebildet und über diese verbunden. Zwischen den Längsstegen 24 weist der Gehäusekörper 16 Ausnehmungen auf, die mit dem Bezugszeichen 25 gekennzeichnet sind. In den Ausnehmungen 25 sind als Strahlungsquellen hier LEDs 28 angeordnet, wobei im Ausführungsbeispiel jeweils drei LEDs 28 auf einem Träger 30 angeordnet sind. Die LEDs 28 sind in Längsrichtung hintereinander auf dem Träger 30 beabstandet vorgesehen. Die Träger 30 sind über Schraubverbindungen 31 mit dem Gehäusekörper 16 bzw. der Vorrichtung 10 verbunden. Die LEDs 28 auf den Trägern 30 bilden sogenannte LED Module 29, die gleichmäßig, insbesondere radialsymmetrisch, über dem Umfang des Gehäusekörpers 16 verteilt vorgesehen sind.

Das zweite Endstück trägt darüber hinaus einen Elektromagneten, der in der gezeigten Darstellung mit einem Gegenstück aus elektrisch leitendem Material verbunden ist, die mit einem Zugseil (nicht dargestellt) zum Einziehen der Vorrichtung 10 gekoppelt ist.

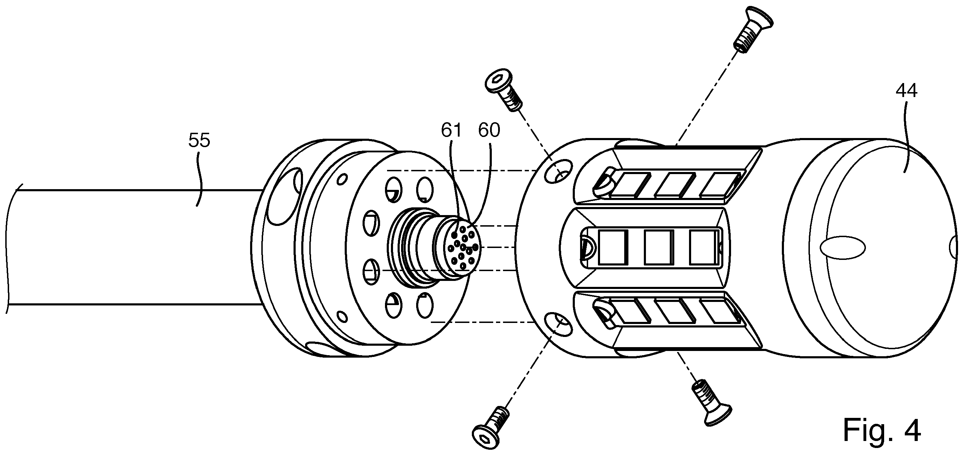

Auf Seiten des ersten Endstücks 12 ist des Weiteren ein Schlauchverbindungselement 50 vorgesehen, in dessen Inneren ein Anschluss für eine Kühlfluidzuleitung 58dargestellt ist. Das Schlauchanschlussstück 50 besteht aus zwei Halbringen, die über eine Schraubverbindung 51 miteinander verbunden werden können und so die über die als Schlauch ausgebildete Kühlfluidzuleitung 55 geschoben werden (vgl. Figur 4) und diese auf der Fluidzuleitung 58 festlegen.

Die Längsstege 24 weisen dabei eine dreieckige Querschnittsform auf, wobei eine Spitze nach außen gerichtet ist und mit den Endstücken 12 und 14 die Mantelfläche der Vorrichtung 10 bildet.

Die LEDs 28 weisen dabei so nach radial außen, dass sie gleichmäßig über den Umfang verteilt abstrahlen und so bei einer Bewegung der Vorrichtung 10 durch eine auszukleidende und zu sanierende Rohrleitung sämtliche Bereiche eines Linermaterials, das in die Rohrleitung eingebracht wurde, mit entsprechender Strahlung beaufschlagen.

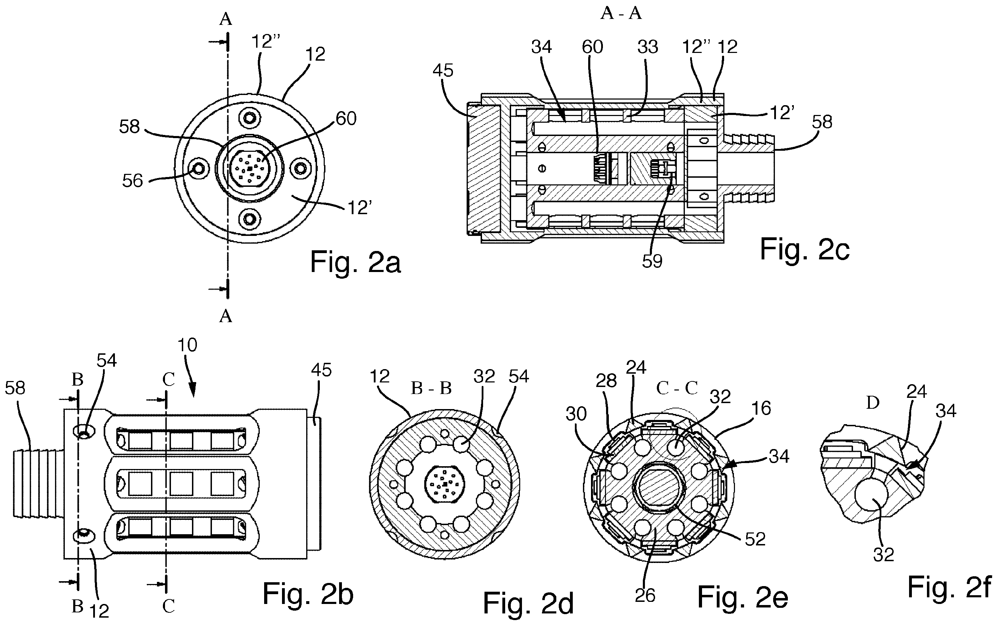

Figur 2 zeigt nun in verschiedenen Darstellungen a) bis f) verschiedene Ansichten der Vorrichtung 10. So zeigt Darstellung a) eine Draufsicht auf das erste Endstück 12, wobei das erste Endstück hier aus zwei Endstückelementen gebildet ist, wobei ein erstes Endstückelement 12' in das weitere Endstückelement 12'' eingeschoben werden kann und dort mittels Schrauben festgelegt werden kann, die in Öffnungen wie in Darstellung b) gezeigt sind, einschraubbar sind. Die Öffnungen sind mit dem Bezugszeichen 54 gekennzeichnet.

Darüber hinaus sehen wir in Darstellung a) Verschraubungselemente 56, die der Verbindung des eingeschobenen Endstückelements 12' entsprechen. Ebenfalls sichtbar sind der die Fluidzuführung 58 sowie Elemente der elektrischen Kontaktiereinheit 60, die durch die Öffnung der Fluidzuführung 58 sichtbar sind.

Figur b) zeigt eine Draufsicht auf die Mantelfläche der Vorrichtung 10, wobei hier im Gegensatz zur Figur 1 der Elektromagnet 45 gezeigt ist und dieser nicht mit dem Gegenstück (44) wie in Figur 1 dargestellt verbunden ist. Der Elektromagnet 45 ist scheibenförmig ausgestaltet und an der freien Stirnfläche des zweiten Endstücks 14 angeordnet. Der Elektromagnet 45 weist einen kleineren Durchmesser auf als das zweite Endstück 14, so das allseitig ein Überstand des zweiten Endstücks 14 gegeben ist.

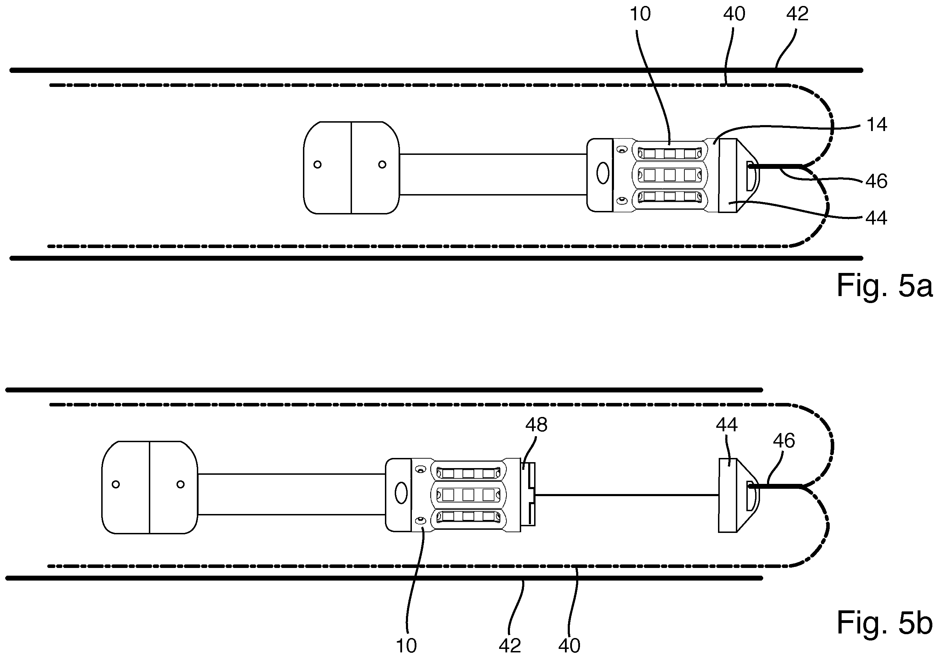

Der Magnet ist dabei mit dem Bezugszeichen 45 versehen und das hiermit verbundene Gegenstück mit dem Bezugszeichen 44. Dabei weist das Gegenstück 44 eine durchgehende Öffnung 43 auf, mittels derer eine Festlegung wie in Figur 5 gezeigt und ein Einziehen mit einem Liner erfolgen kann. Die Öffnung 43 zur Anbringung einer Verbindung mit dem Liner ist in Figur 5 schematisch dargestellt. Das Gegenstück 44 ist in der Art einer Abdeckkappe gestaltet und überdeckt den Magneten 45 allseitig.

Die Darstellung c) zeigt einen Schnitt entlang der Linie A-A in Darstellung a). Sie zeigt hier den Elektromagneten 45 sowie die Einrichtungen zur elektrischen Kontaktierung 60.

Die Darstellungen d) und e) zeigen verschiedene Querschnitte durch die Schnittebenen B-B sowie C-C, wobei Darstellung d) den Übergang von der zentralen Fluidzuführung 58 in die vorgesehenen Kühlfluiddurchgangsöffnungen 32 zeigt, die hier kreisförmig ausgebildet sind und ebenfalls in Darstellung e) gezeigt sind. In Darstellung e) ist nun ein Schnitt im Bereich des Gehäusekörpers 16 gezeigt, wobei hier die Längsrippen 24 in ihrer dreieckigen Querschnittform erkannt werden können, mit der nach radial außen gerichteten Spitze, wobei die weiteren Spitzen in Richtung der LEDs 28 bzw. der LED Träger 30 gerichtet sind. Auf diese Weise kann eine besonders gute Fluidführung erreicht werden, da die Austrittsöffnungen 34 nur eine geringe Breite aufweisen.

Zwischen den Längsstegen 24 und den LEDs 28 bzw. Module 29 bzw. den LED Trägern 30 sind die bereits zu Figur 1 angesprochenen spaltförmigen Austrittsöffnungen 34 vorgesehen, durch die die Luft aus den Kühlfluiddurchgangsöffnungen 32 nach außen austritt und durch die spaltförmige Gestaltung beschleunigt wird. Dabei sind die spaltförmigen Austrittsöffnungen 34 in Längsrichtung nicht durchgehend ausgebildet, wie Darstellung c) entnommen werden kann, sondern erstrecken sich jeweils nur in den Bereichen, in denen auch jeweils eine zu kühlende LED des Moduls 29 angeordnet ist. Auf diese Weise kann die Effektivität der konvektiven Kühlung der LEDs 28 noch weiter verbessert werden. In den Zwischenbereichen sind die Austrittsöffnungen 34 durch Bauteile 33, die in Darstellung c) gezeigt sind, verschlossen.

Der Gehäusekörper weist dabei ausgehend von einer zentralen Öffnung 52 nach radial außen verlaufende Ausleger 26 auf, die sich nach radial außen erstrecken und auf deren äußeren Stirnflächen die Leuchtdioden 28 angeordnet sind. Dadurch begrenzen die Ausleger ebenfalls die Durchgangsöffnungen 32.

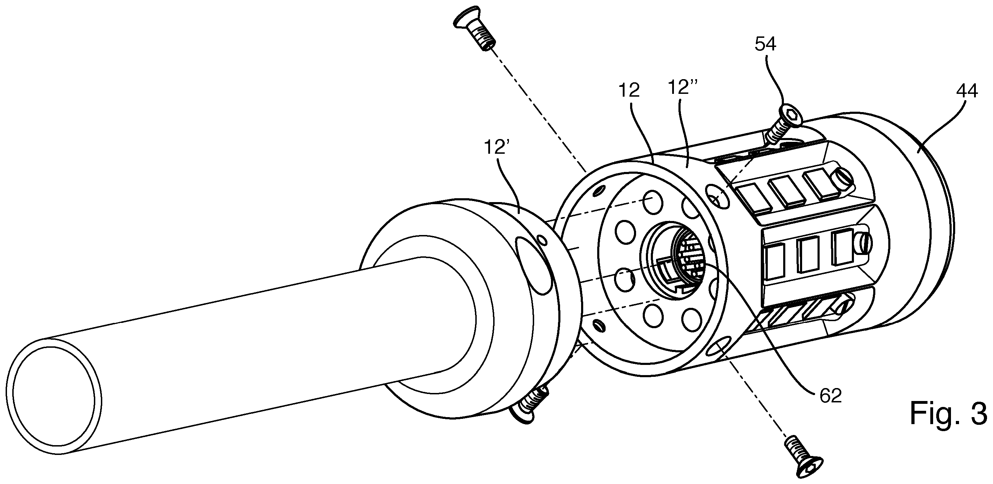

Die Figuren 3 und 4 zeigen nun zwei Perspektiven, in denen das aus zwei Elementen 12' und 12'' bestehende Endstücke 12 dargestellt ist, nämlich dem ersten Endstückelement 12' und dem weiteren Endstückelement 12'', wobei das erste Endstückelement 12' in das in das weitere Element 12'' eingeschoben und dort über die Schraubverbindungen 54 festgelegt wird.

Ebenfalls ist hier das magnetische Gegenstück 44, bei Bestromung des Elektromagneten 45, das mit dem nicht gezeigten Elektromagneten zusammenwirkt, dargestellt.

In den Figuren 3 und 4 lässt sich das elektrische Anschlusselement 60 bestehend aus einem ersten elektrischen Anschlusselement 61 und einem zweiten elektrischen Anschlusselement 62 ersehen, die zusammenwirken zur Herstellung der elektrischen Kontaktierung sowohl der LEDs 28 als auch des Elektromagneten 45.

Das Einziehen der Vorrichtung 10 ist in Figur 5 gezeigt. Durch die Vorsehung des Elektromagneten 45, der mit dem metallischen Gegenstück 44 zusammenwirkt, das mit einem Liner 40 gekoppelt ist, kann die Trennung der Vorrichtung 10 von der Rohrauskleidung 40 über die Ferne erfolgen, indem der Elektromagnet 45 während des Einziehens bestromt wird und danach abgeschaltet wird, so dass eine Trennung von dem metallischen Gegenstück 44 erfolgt. Dafür wird das Gegenstück 44 mit einem Zugseil (Einzugsvorrichtung) 46 verbunden, das in einer entsprechenden Öffnung des Gegenstücks 44 angebracht ist und dessen anderes Ende an dem Linerende 40 angebracht. Die Vorrichtung 10, insbesondere mit ihrem zweiten Endstück 14 wird an dieses Gegenstück 44 geführt und der Elektromagnet45 bestromt. Dies bewirkt den Aufbau des Magnetfeldes und hält die Vorrichtung 10 am Seil. Anschließend wird die Vorrichtung 10 in den Liner 40 gezogen und mit diesem in das auszukleidende Rohr eingebracht (inversiert). Ist der Bestimmungsort erreicht, wird die Vorrichtung 10, durch Abschalten des Magneten 45, vom Zugseil 46 getrennt und kann zu einem gewünschten Zeitpunkt aus dem sanierten Rohr 42 entfernt werden, in dem sie rückwärts, also in Richtung der Einbringstelle wieder herausgezogen wird. Dabei kann, sofern die Vorrichtung Mittel zum Aushärten aufweist, dieses betätigt werden, z.B. UV-Strahlung ausgesendet werden, so dass eine Aushärtung des Harz des Liners erfolgt. Die Rückzugsgeschwindigkeit wird dabei durch die Aushärteeigenschaften bestimmt. Der Elektromagnet 45 kann dabei Teil des zweiten Endstücks 14 sein oder mit diesem insbesondere lösbar verbunden sein. Der Elektromagnet 45 wird dabei insbesondere über eine Schraubverbindung an dem zweiten Endstück 14 und insbesondere an dessen freier Stirnseite festgelegt.

## Patentansprüche

1. Vorrichtung (10) zum Einziehen und Aushärten einer Rohrleitungsauskleidung (40) in eine Rohrleitung, umfassend ein Gehäuse (11) mit einem ersten (12) und einem zweiten (14) gegenüberliegenden Endstück sowie einem sich zwischen den Endstücken (12,14) erstreckenden Gehäusekörper (16) sowie einer mit dem ersten Endstück (12) verbundenen Stromzuleitung, wobei am zweiten Endstück (14), insbesondere an dessen freier Stirnfläche, ein Elektromagnet (45) vorgesehen ist, der mit der Stromzuleitung gekoppelt und über diese bestrombar ist, wobei der Elektromagnet (45) eingerichtet ist, mit einem metallischen Gegenstück (44) magnetisch zusammenzuwirken, wobei das metallische Gegenstück (44) mit der Rohrleitungsauskleidung (40) koppelbar ist, und wobei der Elektromagnet (45) während des Einziehens bestrombar ist und danach abschaltbar ist, so dass die Vorrichtung von dem metallischen Gegenstück (44) trennbar ist, wobei die Rohrleitungsauskleidung (40) schlauchförmig ist und ein Textilmaterial umfasst, das mit einem Harz beschichtet oder imprägniert ist, wobei das Harz aushärtbar ist, wobei das Harz durch elektromagnetische Strahlung einer vorgegebenen Wellenlänge oder eines vorgegebenen Wellenlängenbereichs aushärtbar ist, **dadurch gekennzeichnet, dass** der Gehäusekörper (16) radial verlaufende Ausleger (26) aufweist, auf deren äußeren Stirnflächen jeweils mindestens eine Strahlungsquelle (28) angeordnet ist, die Strahlung der vorgegebenen Wellenlänge oder des vorgegebenen Wellenlängenbereichs ausstrahlen und mit der Stromzuleitung verbunden sind und wobei das Gehäuse (10) zwischen den Auslegern (26) Kühlfluid-Durchgangsöffnungen (32) aufweist, die mit einer Kühlfluidzuleitung gekoppelt sind und sich in Längsrichtung wenigstens abschnittsweise durch den Gehäusekörper (16) erstrecken, wobei die Kühlfluiddurchgangsöffnungen (32) im Bereich des Gehäusekörpers (16) nach radial außen durch Längsstege (24) begrenzt sind, und wobei zwischen den Längsstegen (24) und den Auslegern (26) und/oder den auf den Auslegern (26) angeordneten Strahlungsquellen (28) mindestens eine in Längsrichtung verlaufende spaltförmige Austrittsöffnung (34) für das Kühlfluid besteht.

2. Vorrichtung nach Anspruch 1, **dadurch gekennzeichnet, dass** das Gegenstück (44) eine Einrichtung, insbesondere eine Durchgangsöffnung zum Verbinden mit einer Einzugsvorrichtung (46) für die Vorrichtung (10) in die Rohrleitung aufweist.

3. Vorrichtung nach Anspruch 1 oder 2, **dadurch gekennzeichnet, dass** das Gegenstück (44) als Abdeckkappe für den Elektromagneten (45) ausgebildet ist und diesen insbesondere hutförmig abdeckt.

4. Vorrichtung nach einem der vorangehenden Ansprüche, **dadurch gekennzeichnet, dass** eine äußere Umfangskontur des Gegenstücks (44) einer äußeren Umformungskontur des zweiten Endstücks (14) entspricht.

5. Vorrichtung nach einem der vorangehenden Ansprüche, **dadurch gekennzeichnet, dass** die Kühlfluidzuleitung mit dem ersten Endstück verbunden ist.

6. Vorrichtung nach einem der vorangehenden Ansprüche, **dadurch gekennzeichnet, dass** als Strahlungsquellen (28) LEDs vorgesehen sind, wobei auf jeder Stirnseite der Ausleger (26) mehrere, insbesondere zwei oder mehr LEDs (28), insbesondere drei LEDs (28) angeordnet sind, die insbesondere zu LED-Modulen (29) gruppiert sind.

7. Vorrichtung nach einem der vorangehenden Ansprüche, **dadurch gekennzeichnet, dass** die Stirnflächen der Ausleger (26) gegenüber den Längsstegen (24) zurückgesetzt sind.

8. Vorrichtung nach einem der vorangehenden Ansprüche, **dadurch gekennzeichnet, dass** sich die Ausleger (26) und/oder die Längsstege (24) und/oder die Austrittöffnungen (34) über die gesamte Länge des Gehäusekörpers (16) erstrecken, wobei die Austrittsöffnungen (34) unterbrochen ausgebildet sein können.

9. Vorrichtung nach einem der vorangehenden Ansprüche, **dadurch gekennzeichnet, dass** das zweite Endstück (14) geschlossen ausgebildet ist.

10. Vorrichtung nach einem der vorangehenden Ansprüche, **dadurch gekennzeichnet, dass** die Austrittsöffnungen (34) eine Breite von 0,1 bis 10 mm, insbesondere 0,5 bis 5 mm und insbesondere 0,7 bis 1,1 mm aufweisen.

11. Vorrichtung nach einem der vorangehenden Ansprüche, **dadurch gekennzeichnet, dass** als Strahlungsquellen LEDs (28) vorgesehen sind und die LEDs (28) ein Emissionsmaximum bei einer Wellenlänge von 360 bis 450 nm, insbesondere von 365 bis 405 nm und insbesondere von 385 bis 405 nm und vorzugsweise von 395 nm aufweisen.

12. Vorrichtung nach einem der vorangehenden Ansprüche, **dadurch gekennzeichnet, dass** die Vorrichtung (10) rotationssymmetrisch und insbesondere im Wesentlichen zylindrisch ausgebildet ist.

13. Vorrichtung nach einem der vorangehenden Ansprüche, **dadurch gekennzeichnet, dass** die Endstücke (12,14) mit den Längsstegen (24) einstückig verbunden sind.

14. Vorrichtung nach einem der vorangehenden Ansprüche, **dadurch gekennzeichnet, dass** das Gehäuse (11) einen zentralen Kanal (52) aufweist, der von einer Gehäusefläche umschlossen ist von dem aus sich die Ausleger (26) radial nach außen erstrecken.

## Claims

1. Device (10) for pulling and curing a pipeline lining (40) into/in a pipeline, comprising a housing (11) with a first end piece (12) and with a second opposite end piece (14), and a housing body (16) extending between the end pieces (12,14), and a power supply line which is connected to the first end piece (12), wherein an electromagnet (45) is provided on the second end piece (14), in particular on the free end face thereof, said electromagnet (45) being coupled to the power supply line and being able to be energized via the latter, wherein the electromagnet (45) is configured to interact magnetically with a metallic counter-piece (44), wherein the metallic counter-piece (44) can be coupled with the pipe lining (40), and wherein the electromagnet (45) can be energized during retraction and can be switched off thereafter, so that the device can be separated from the metallic counter-piece (44), wherein the pipeline lining (40) is tubular and comprises a textile material, which is coated or impregnated with a resin, wherein the resin is curable, wherein the resin is curable by electromagnetic radiation of a specified wavelength or of a specified wavelength range, **characterized in that** the housing body (16) has radially extending arms (26), on the outer end faces of which at least one radiation source (28) is arranged in each case emitting radiation of the specified wavelength or of the specified wavelength range, and being connected to the power supply line, and wherein the housing (10) has cooling-fluid passage openings (32) between the arms (26), which cooling-fluid passage openings are coupled to a cooling-fluid supply line and extend in the longitudinal direction at least in certain sections through the housing body (16), wherein the cooling-fluid passage openings (32) are delimited radially outward by longitudinal webs (24) in the region of the housing body (16), and wherein, between the longitudinal webs (24) and the arms (26) and/or the radiation sources (28) arranged on the arms (26), there is at least one gap-like outlet opening (34) which runs in the longitudinal direction and is intended for the cooling fluid.

2. Device as claimed in claim 1, **characterized in that** the counter-piece (44) has a means, in particular a passage opening for connection to a pulling-in device (46) for pulling the device (10) into the pipeline.

3. Device as claimed in claim 1 or 2, **characterized in that** the counter-piece (44) is in the form of a covering cap for the electromagnet (45) and covers this in particular in the manner of a hat.

4. Device as claimed in one of the preceding claims, **characterized in that** an outer circumferential contour of the counter-piece (44) corresponds to a formed outer contour of the second end piece (14).

5. Device as claimed in one of the preceding claims, **characterized in that** the cooling-fluid supply line is connected to the first end piece.

6. Device as claimed in one of the preceding claims, **characterized in that** LEDs are provided as radiation source (28), wherein a plurality of LEDs (28), in particular two or more, in particular three LEDs (28), which are in particular grouped together as LED modules (29), are arranged on each end side of the arms (26).

7. Device as claimed in one of the preceding claims, **characterized in that** the end faces of the arms (26) are set back with respect to the longitudinal webs (24).

8. Device as claimed in one of the preceding claims, **characterized in that** the arms (26) and/or the longitudinal webs (24) and/or the outlet openings (34) extend over the entire length of the housing body (16), wherein the outlet openings (34) may have an interrupted form.

9. Device as claimed in one of the preceding claims, **characterized in that** the second end piece (14) has a closed form.

10. Device as claimed in one of the preceding claims, **characterized in that** the outlet openings (34) have a width of 0.1 to 10 mm, in particular 0.5 to 5 mm and in particular 0.7 to 1.1 mm.

11. Device as claimed in one of the preceding claims, **characterized in that** LEDs (28) are provided as radiation sources and **in that** the LEDs (28) have an emission maximum at a wavelength of 360 to 450 nm, in particular 365 to 405 nm and in particular 385 to 405 nm and preferably 395 nm.

12. Device as claimed in one of the preceding claims, **characterized in that** the device (10) has a rotationally symmetrical, and in particular substantially cylindrical, form.

13. Device as claimed in one of the preceding claims, **characterized in that** the end pieces (12, 14) are connected to the longitudinal webs (24) in one piece.

14. Device as claimed in one of the preceding claims, **characterized in that** the housing (11) has a central channel (52), which is surrounded by a housing surface from which the arms (26) extend radially outward.

## Revendications

1. Dispositif (10) d'insertion et de durcissement d'un revêtement de canalisation (40) dans une canalisation, comprenant un boîtier (11) avec une première (12) et une deuxième (14) pièces d'extrémité opposées, ainsi qu'un corps de boîtier (16) s'étendant entre les pièces d'extrémité (12, 14) et une ligne d'alimentation en courant connectée à la première pièce d'extrémité (12), dans lequel un électroaimant (45) est prévu sur la deuxième pièce d'extrémité (14), en particulier sur sa face frontale libre, lequel électroaimant est couplé à la ligne d'alimentation en courant et peut être alimenté par celle-ci, dans lequel l'électroaimant (45) est conçu pour agir de concert magnétiquement avec une contrepartie métallique (44), dans lequel ladite contrepartie métallique (44) peut être couplée au revêtement de canalisation (40), et dans lequel ledit électroaimant (45) peut être alimenté en courant pendant l'insertion et être désactivé ensuite, de sorte que le dispositif peut être séparé de la contrepartie métallique (44), dans lequel le revêtement de canalisation (40) est en forme de tuyau flexible et comprend un matériau textile qui este revêtu ou imprégné d'une résine, dans lequel la résine est durcissable, dans lequel la résine peut être durcie par rayonnement électromagnétique d'une longueur d'onde prédéterminée ou d'une plage de longueurs d'onde prédéterminée, **caractérisé par le fait que** le corps de boîtier (16) présente des bras (26) qui s'étendent radialement et sur les faces frontales extérieures desquels est disposée respectivement au moins une source de rayonnement (28) émettant un rayonnement de la longueur d'onde prédéterminée ou de la plage de longueurs d'onde prédéterminée et connectées à la ligne d'alimentation en courant, et dans lequel le boîtier (10) présente, entre les bras (26), des ouvertures de passage de fluide de refroidissement (32) qui sont couplées à une conduite d'alimentation en fluide de refroidissement et traversent le corps de boîtier (16) dans la direction longitudinale au moins par sections, dans lequel les ouvertures de passage de fluide de refroidissement (32) sont délimitées radialement vers l'extérieur, au niveau du corps de boîtier (16), par des nervures longitudinales (24), et dans lequel entre les nervures longitudinales (24) et les bras (26) et/ou les sources de rayonnement (28) disposées sur les bras (26), se trouve au moins une ouverture de sortie (34) pour le fluide de refroidissement qui est en forme de fente et s'étend dans la direction longitudinale.

2. Dispositif selon la revendication 1, **caractérisé par le fait que** la contrepartie (44) comprend un dispositif, en particulier une ouverture de passage, permettant le raccordement à un dispositif d'insertion (46) pour le dispositif (10) dans la canalisation.

3. Dispositif selon la revendication 1 ou 2, **caractérisé par le fait que** la contrepartie (44) est conçue en tant que capuchon pour l'électroaimant (45) et recouvre celui-ci-, en particulier en forme de chapeau.

4. Dispositif selon l'une quelconque des revendications précédentes, **caractérisé par le fait qu'**un contour circonférentiel extérieur de la contrepartie (44) correspond à un contour de déformation extérieur de la deuxième pièce d'extrémité (14).

5. Dispositif selon l'une quelconque des revendications précédentes, **caractérisé par le fait que** la conduite d'alimentation en fluide de refroidissement est raccordée à la première pièce d'extrémité.

6. Dispositif selon l'une quelconque des revendications précédentes, **caractérisé par le fait que** des DEL (28) sont prévues comme sources de rayonnement, dans lequel plusieurs DEL (28), en particulier deux ou plus, en particulier trois DEL (28), sont disposées sur chaque face frontale des bras (26), qui, en particulier, sont regroupées pour former des modules DEL (29).

7. Dispositif selon l'une quelconque des revendications précédentes, **caractérisé par le fait que** les faces frontales des bras (26) sont en retrait par rapport aux nervures longitudinales (24).

8. Dispositif selon l'une quelconque des revendications précédentes, **caractérisé par le fait que** les bras (26) et/ou les nervures longitudinales (24) et/ou les ouvertures de sortie (34) s'étendent sur toute la longueur du corps de boîtier (16), dans lequel les ouvertures de sortie (34) peuvent être conçues de manière à être interrompues.

9. Dispositif selon l'une quelconque des revendications précédentes, **caractérisé par le fait que** la deuxième pièce d'extrémité (14) est conçue de manière à être fermée.

10. Dispositif selon l'une quelconque des revendications précédentes, **caractérisé par le fait que** les ouvertures de sortie (34) présentent une largeur comprise entre 0,1 et 10 mm, en particulier entre 0,5 et 5 mm, et en particulier entre 0,7 et 1,1 mm.

11. Dispositif selon l'une quelconque des revendications précédentes, **caractérisé par le fait que** des DEL (28) sont prévues comme sources de rayonnement et que les DEL (28) présentent un maximum d'émission à une longueur d'onde de 360 à 450 nm, en particulier de 365 à 405 nm, et en particulier de 385 à 405 nm, et de préférence de 395 nm.

12. Dispositif selon l'une quelconque des revendications précédentes, **caractérisé en ce que** le dispositif (10) est symétrique en rotation et est en particulier sensiblement cylindrique.

13. Dispositif selon l'une quelconque des revendications précédentes, **caractérisé par le fait que** les pièces d'extrémité (12, 14) sont reliées en une seule pièce aux nervures longitudinales (24).

14. Dispositif selon l'une quelconque des revendications précédentes, **caractérisé par le fait que** le boîtier (11) comprend un canal central (52) qui est entouré par une surface de boîtier et à partir duquel les bras (26) s'étendent radialement vers l'extérieur.
